# FASCICULE DE BREVET EUROPEEN

(11) **EP 0 843 153 B1**
(45) Date de publication et mention de la délivrance du brevet: **12.02.2003**
(21) Numéro de dépôt: 97402712.0
(22) Date de dépôt: 13.11.1997
(51) Int. Cl.: G01B 11/00

(54) **Système de mesure des caractéristiques d'un objet**
System zur Messung der Charakteristika eines Objekts
System for measuring the characteristics of an object

(30) Priorité: 15.11.1996 FR 9613962
(43) Date de publication de la demande: 20.05.1998
(73) Titulaire: European Aeronautic Defence and Space Company - EADS France, 75016 Paris (FR)
(72) Inventeur: Bourgoin, Jean-Pierre, 18000 Bourges (FR); Jacquot, Jean-Michel, 18000 Bourges (FR); Connan, Patrick, 18570 La Chapelle Siant Ursin (FR); Fle, Benoît, 18110 Vignoux Sous Les Aix (FR)
(74) Mandataire: Dubois-Chabert, Guy

(56) Documents cités:
- FR-A- 2 710 563
- GB-A- 2 078 937
- GB-A- 2 236 850
- US-A- 5 515 159
- US-A- 5 570 190

## Description

### Domaine technique

la présente invention concerne un système de mesure des caractéristiques d'un objet.

Le domaine de l'invention est celui de la mesure rapide et précise des caractéristiques d'un objet, par exemple d'un colis, et notamment de la mesure des trois dimensions englobantes de celui-ci.

### Etat de la technique antérieure

Dans le domaine de l'art antérieur ainsi défini, il existe de nombreuses publications, et notamment :
- une demande de brevet français FR-A-2 672 119 qui décrit un système de mesure de surfaces à trois dimensions devant être représentées mathématiquement. Ce système comprend une machine permettant la mesure d'une surface à trois dimensions, des dispositifs optiques destinés à générer une image de ladite surface, ces dispositifs optiques pouvant être déplacés et orientés, et des dispositifs de traitement reliés aux dispositifs optiques et destinés à déterminer les coordonnées de points de surface à mesurer ;
- une demande de brevet français FR-A-2 720 155 qui décrit un procédé et un dispositif de mesure tridimensionnelle destinés à la mesure rapide et précise d'objets de grande dimension, tels que véhicules. Ce procédé comprend les étapes de détermination approximative des positions de mesure d'un capteur de mesure de forme, de positionnement du capteur successivement aux positions de mesure pour relever la forme de portions superficielles de l'objet, les portions superficielles étant représentées par des points de l'objet dont les coordonnées sont exprimées dans un référentiel lié au capteur, de repérage précis des positions du capteur aux positions déterminées approximativement, dans un référentiel fixe prédéterminé, et de transformation des coordonnées de points de portions superficielles exprimées dans le repère lié au capteur en des coordonnées exprimées dans le référentiel fixe en fonction des positions repérées du capteur ;
- une demande de brevet français FR-A-2 710 563 qui décrit une installation pour identifier et peser en continu un colis, dont l'étiquette présente un code-barres, comprenant une succession d'au moins trois convoyeurs sans fin, qui présente au voisinage de l'interstice entre le premier et le second convoyeur :
   - un premier ensemble de cellules disposées dans un plan parallèle au plan d'avancement du colis ;
   - un second ensemble orthogonal au premier ;
   dans laquelle le plateau de la balance mesure à la volée le poids du colis, qui avance sur le second convoyeur et transmet ces informations à l'unité de traitement ; et dans laquelle le deuxième et le troisième convoyeurs sont entraînés en permanence et en synchronisme.

Mais les systèmes décrits dans ces différentes demandes présentent de nombreux inconvénients. Ainsi la première demande décrit un système qui utilise des capteurs de détection tactile, et décrit un procédé de mesure compliqué à mettre en oeuvre. La seconde demande décrit un système qui utilise des transducteurs à ultrasons qui peuvent être perturbés par le milieu industriel ambiant, et un procédé de mesure complexe à mettre en oeuvre. La troisième demande n'a pas le même objet que celui de l'invention, mais peut la compléter.

En ce qui concerne le système de l'invention, l'environnement de celui-ci peut présenter, en effet, des contraintes importantes :
- température de -15°C à +50°C ;
- humidité relative de presque 100% dans certaines conditions d'utilisation ;
- protection du réseau électrique pouvant être très perturbé par de gros moteurs de manutentions ;
- la machine peut être déplacée dans des ateliers ou sur d'autres sites ;
- protection contre les vibrations trop importantes pendant le transport dans les allées ou entre différents sites.

L'invention a pour objet un système permettant de simplifier les systèmes de l'art antérieur en permettant notamment de mesurer en un temps inférieur à deux secondes des objets de formes quelconques en vue de compléter ou de modifier une base de donnée pouvant être distante.

### Exposé de l'invention

L'invention propose un système de mesure de caractéristiques d'un objet, comprenant :
- une balance munie d'un plateau de pesée ;
- deux boîtes à lumière, par exemple deux écrans diffusants éclairés par au moins une source de lumière, la première étant disposée dans un plan supérieur horizontal au-dessus dudit plateau, la seconde étant disposée dans un plan vertical au dessus et sur le côté du plan supérieur de la première ;
- un organe de traitement relié d'une part à un organe d'entrée d'informations et d'autre part à un organe de visualisation ;
- au moins deux caméras dirigées, selon deux directions différentes (par exemple à 90°), vers l'espace de positionnement de l'objet situé au-dessus du plan supérieur de la première boîte à lumière, et reliées à l'organe de traitement.

Dans une variante avantageuse, le système de l'invention comprend, en outre, un lecteur de codes à barres.

Avantageusement un croisillon est dessiné sur chaque écran diffuseur. Les caméras peuvent être fixées sur un portique. L'organe de traitement comprend une unité centrale, une unité disque souple (en anglais « floppy-disk »), un disque dur, une carte d'acquisition et de traitement d'image, une carte de liaison, une carte vidéo. Ce système peut être disposé sur une table mobile sur des roulettes.

Dans une variante de réalisation le système de l'invention comprend un tapis roulant sur lequel est placé l'objet, et une cellule photoélectrique reliée à l'organe de traitement.

Le système de l'invention peut, avantageusement, être utilisé pour compléter ou modifier une base de données.

Avantageusement les deux boîtes à lumière permettent de s'affranchir de toutes les aspérités qui apparaissent sur l'objet par exemple sur un colis, en uniformisant les images vues par les caméras et en évitant d'obtenir des fausses mesures.

Avantageusement le système de l'invention est un système sans contact, ce qui permet d'obtenir un temps de mesure rapide. Le système de l'invention permet, en effet, de mesurer en un temps inférieur à deux secondes les caractéristiques d'objets de formes quelconques en vue de compléter ou modifier une base de données pouvant être distante.

Avantageusement le système de l'invention est un système passif non perturbé par le milieu industriel environnant.

Dans le système de l'invention les mesures de dimensions, de poids et l'identification par code-barres peuvent avantageusement être réalisées par une seule machine autonome.

Avantageusement le système de l'invention permet un accès à toutes les bases de données possibles.

Les domaines d'application du système de l'invention sont nombreux ; ce sont par exemple :
- le transport express de colis, ou messagerie ;
- la prestation de services logistiques (gestion de stock, stockage, manutention, entrepôts, ..) ;
- l'emballage ;
- la préparation de commandes ;
- la vente par correspondance ;
- le commerce en gros (distribution de produits pharmaceutiques et cosmétiques) ;
- le contrôle et mesure, métrologie, calibrage.

### Brève description des dessins

- Les figures 1 et 2 illustrent le système de l'invention ;
- les figures 3A à 3E illustrent un organigramme de fonctionnement du système de l'invention ;
- la figure 4 illustre un exemple de visualisation de l'écran du système de l'invention ;
- la figure 5 illustre une variante de réalisation du système de l'invention.

### Exposé détaillé de modes de réalisation

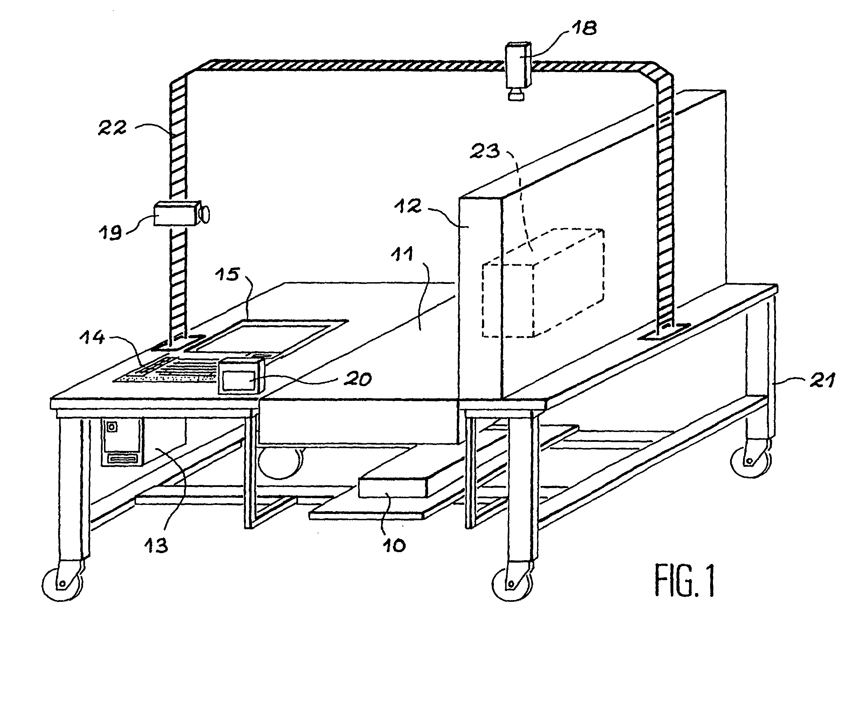

Comme illustré sur la figure 1, le système de l'invention comprend :
- une balance 10 munie d'un plateau de pesée ;
- deux boîtes à lumière 11 et 12, constituées chacune d'un écran diffusant éclairé par au moins une source de lumière, la première étant disposée dans un plan supérieur horizontal au-dessus du plateau de la balance 10, la seconde étant disposée dans un plan vertical au-dessus et sur le côté du plan supérieur de la première ;
- un organe de traitement 13 relié d'une part à un organe d'entrée d'informations, par exemple un clavier à membrane 14, et d'autre part à un organe de visualisation ou écran 15 ;
- au moins deux caméras 18 et 19 situées selon dans deux directions différentes, par exemple orthogonales, dirigées vers l'espace situé au-dessus du plan supérieur de la première boîte à lumière 11 et reliées à l'organe de traitement 13 ;
- éventuellement un lecteur de code-barres 20.

Dans la réalisation illustrée sur la figure 1, le système de l'invention est disposé sur une table 21 munie de roulettes, ce qui permet de déplacer celui-ci en fonction des besoins de l'utilisateur, et les caméras sont fixées sur un portique 22.

Les boîtes à lumière sont essentielles pour le système de l'invention. Elles permettent de s'affranchir de la texture de l'objet à mesurer 23. Les caméras voient ainsi les objets à contre-jour. Le contraste est ainsi maximal quelle que soit la couleur de l'objet (même blanc), et on évite les problèmes liés à la présente d'étiquettes, de bandes de couleur, de marquage, ... Tout est vu noir sur fond blanc par les caméras.

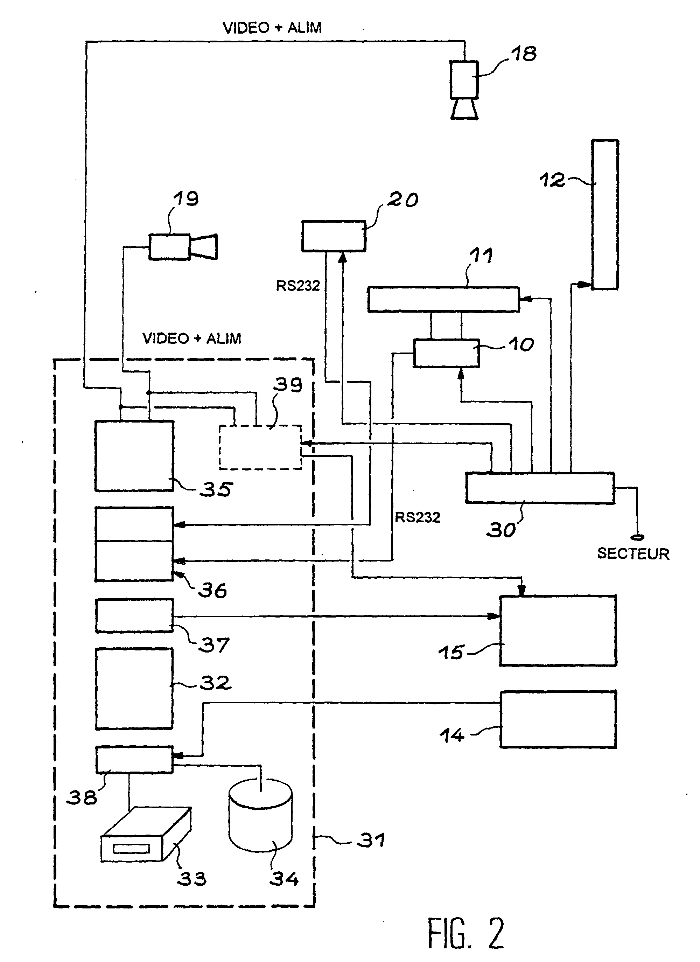

La figure 2 illustre l'architecture du système de l'invention. Les éléments, déjà représentés sur la figure 1, sont illustrés ici avec la même référence. Sur cette figure 2 apparaissent, en outre, une réglette de distribution 30, un rack (ou boîtier) industriel 31 dans lequel sont disposés notamment une unité centrale ou CPU 32, une unité disque souple 33, un disque dur 34, une carte d'acquisition et de traitement d'images 35, une carte de liaison 36, une carte vidéo 37, une carte de gestion des périphériques 38, et une alimentation 39.

Le système de l'invention permet ainsi de constituer une base de données comprenant :
- les mesures tridimensionnelles d'un objet (de quelques millimètres à quelques mètres de côté) avec ou sans emballage, de formes non parallélépipédiques, sac plastique ... (dans ce cas la machine donne les cotes maximales), les formes peuvent posséder des trous au centre, des étiquettes peuvent être collées, même en périphérie, les couleurs des objets sont variées ;
- la mesure de poids uniquement limitée par le type de balance utilisée ; le socle est le plateau de la balance ;
- la lecture d'un identifiant, s'il existe sous la forme de code-barres, une lecture manuelle au crayon optique est effectuée. Sinon une saisie clavier renseigne le logiciel.

Dans un exemple de réalisation, le système de l'invention est composé de quatre ensembles matériels :
- un module mécanique : celui-ci, qui supporte les autres éléments, comporte une table 21 avec des roulettes pour assurer un déplacement aisé. La partie supérieure est constituée d'un portique 22 soutenant les deux caméras vidéo ;
- un module de calcul dimensionnel : celui-ci est constitué de deux caméras 18 et 19, de la carte d'acquisition et de traitement 35 utilisant une librairie 32 bits ainsi qu'un logiciel donnant les caractéristiques des objets analysés ;
- un module de communication : celui-ci est constitué d'une carte de liaisons RS232 sur bus ISA permettant de recueillir les informations de poids, et d'identification ;
- un module de calcul : celui-ci est constitué de la CPU 32 par exemple de type Pentium 120 MHz PCI équipée de 32 Mo de DRAM, un disque souple 33 1,44 Mo, un disque dur 34 1,2 Go, une carte vidéo d'affichage 37 PCI 16 bits VGA/SVGA. La carte CPU 32 est équipée d'une interface parallèle pour les éditions.

Ces trois derniers ensembles sont intégrés dans un minichâssis industriel 6 slots, alimentation 200 Watts, fixé sous le plan de travail.

Les boîtes à lumière 11 et 12 sont par exemple constituées chacune de trois réglettes de deux néons de 1.2 mètres de long. Les alimentations des tubes néons sont équipées de ballasts électroniques, ce qui évite tout battement dû à la fréquence d'échantillonnage des caméras 18 et 19. Chaque ballast découpe l'alimentation secteur 220 V / 50 Hz en 42 kHz. L'échantillonnage des caméras peut varier de 50 Hz à 10 kHz, ce qui permet la suppression du battement. Les ballasts autorisent un fonctionnement de -15°C à +50°C, ce qui permet de fonctionner en milieu industriel. Ces tubes sont par exemple de type MAZDA, RBP Club 236 HFB. Chaque écran diffusant permet d'obtenir une lumière constante quelle que soit la position de l'objet sur le plan de mesure. Il est épais d'environ 5 mm et est fixé par exemple à 15 cm des néons.

Sur le plan horizontal, un verre « triplex » d'environ 7 mm d'épaisseur permet de recevoir les objets à mesurer. Il est fixé à environ 1 cm au-dessus de l'écran diffusant associé à la première boîte à lumière 11. Sur chacun des écrans diffusants, un croisillon est dessiné. celui-ci sert pour l'étalonnage du système. Sa dimension doit être inférieure à la plus petite taille d'objet mesurable par le système.

La table 21 peut avoir les dimensions suivantes : 2,5 mètres × 0,8 mètres. Le portique 22 mesure environ 1,5 m de haut (par rapport à la table) et environ 2,5 m de large. Les dimensions sont dictées par les cotes maximales à mesurer et l'angle de l'objectif utilisé.

A titre d'exemple, les objectifs des caméras 18 et 19 sont de 8 mm de focale et ont un angle d'ouverture de 34°. Pour mesurer dans ce cas des paquets d'environ 0,5 m de côté par exemple, il faut que la caméra se trouve à un mètre au moins de la plus grande surface. Les caméras 18 et 19 utilisées sont par exemple du type CCD de résolution 752 × 582 pixels, à 256 niveaux de gris par pixel, par exemple de marque SONY référence IXC075. Le capteur CCD fait 1/3 de pouce. Les dimension du capteur sont les suivantes : H=6 mm et V=4,96 mm. Les caméras sont synchronisées par une prise d'image instantanée sur les deux plans.

Pour numériser les deux images simultanément, une carte d'acquisition et traitement d'image 36 de type MATROX METEOR RGB est utilisée dans le mode PAL RGB. L'extraction des paramètres des images est réalisée en utilisant la librairie MATROX MIL 32 sous Windows NT 3.51.

La lecture de code-barres peut être ou non adjointe au système. Sur le prototype, le modèle utilisé est un METROLOGIC ICS 700, couplé à une liaison RS 232. On peut également envisager l'utilisation d'un lecteur « douchette », auquel cas l'interfaçage avec l'unité de traitement sera différent.

La lecture du code-barres est une fonction qui boucle sur elle-même. L'information n'est prise en compte que lorsque l'opérateur vient passer devant le lecteur un objet muni d'un code à barre.

En cas d'inclinaison du système de l'invention, celui-ci continue à fonctionner normalement, seule la balance doit être réglée pour être approximativement de niveau (un niveau est intégré dans le socle de la balance et des pièces de réglage permettent un réglage facile). A titre d'exemple, la balance utilisée est une METLER TOLEDO de référence SB 32000.

L'interface utilisateur est composé :
- d'un écran 15 SVGA 14 pouces incrustés sur le plan de travail ;
- un clavier industriel 14 QWERTY 101 touches à membrane, lui aussi incrusté dans le plan de travail.

Le système d'exploitation sur l'appareil est Windows NT.

Dans un exemple de réalisation, les liaisons avec l'organe de traitement PC sont de type :
- RS232 avec la balance ;
- RS232 ou émulation clavier avec un lecteur code-barres ;
- port parallèle pour une impression de listing ;
- clavier pour la saisie des conditionnements ou des identifiants ;
- réseau (option).

La précision obtenue est de ±1 pixel sur la mesure avec des objets à bords francs. En fonction de la distance objectif/objet, la précision évolue.

La fonction principale du système de l'invention est de fournir les caractéristiques dimensionnelles d'un objet placé sur le système de mesure. Ces caractéristiques enrichissent un fichier qui est utilisé ultérieurement.

Une base de données, par exemple ASCII ou compatible Microsoft, peut être renseignée soit automatiquement par le système de l'invention, soit manuellement par l'opérateur. Elle est utilisée pour extraire des informations en vue de compléter d'autres bases sur d'autres sites, ou pour utiliser un logiciel d'optimisation de rangement dans les magasins. Ce logiciel peut ne pas être sur la machine de mesure. Le moyen de transport de l'information peut alors être une disquette ou le réseau (le protocole d'échange est très varié et peut être déterminé au cas par cas). Cette base de données est transformable pour assurer un transfert vers d'autres systèmes.

Dans une mise en oeuvre du système de l'invention, les objets à mesurer sont placés sur la machine au centre de la balance pour les mesures, et sont ensuite rangés. Lors de la validation des mesures par l'opérateur, le conditionnement est à indiquer (nombre d'éléments pour une mesure de dimension). Si pour un code d'identification donné, un conditionnement donné, les mesures sont différentes de celles déjà dans la base, l'opérateur est averti.

La mesure est également possible dans le cas d'un positionnement quelconque d'un objet. L'angle de positionnement est détecté automatiquement et si cet angle est supérieur à 10°, un recalage est opéré. Le temps de calcul est cependant un peu plus important dans ce cas.

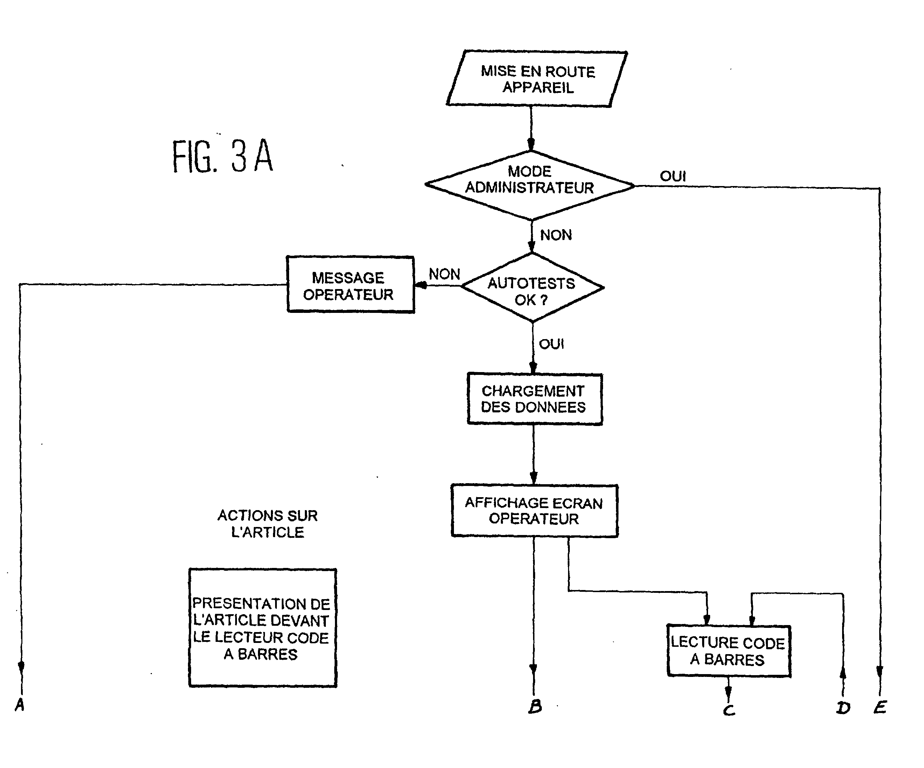

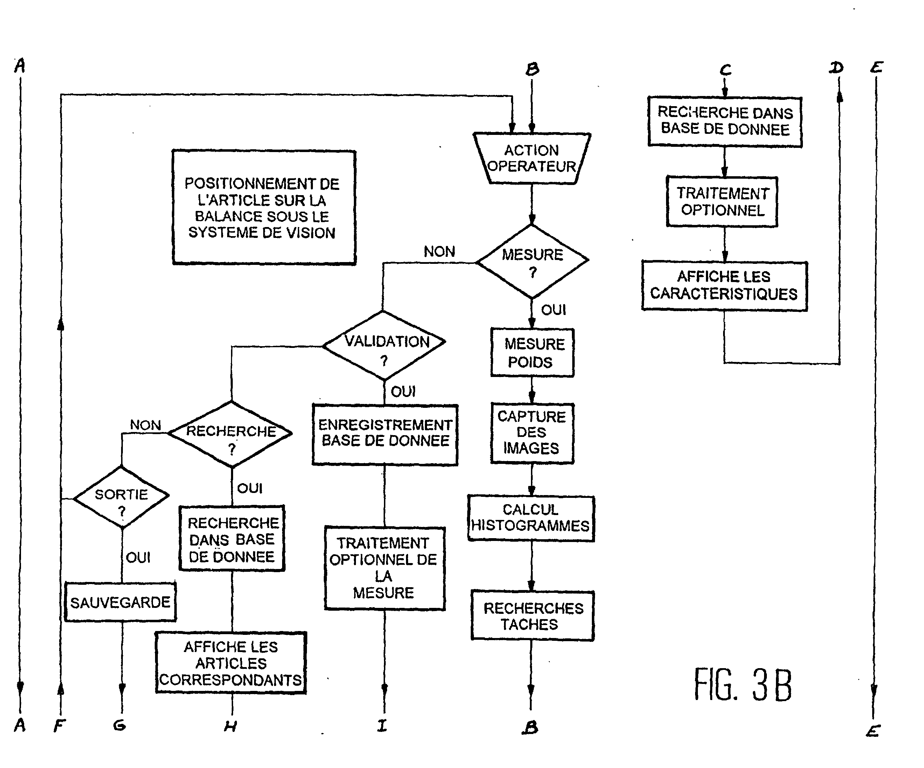

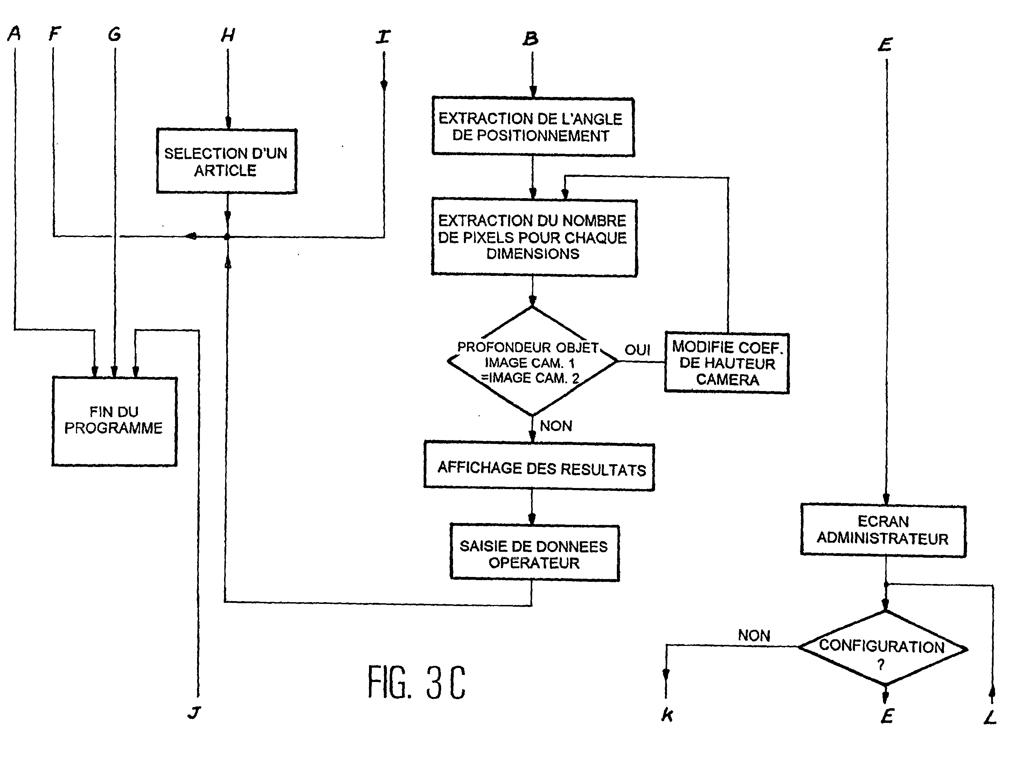

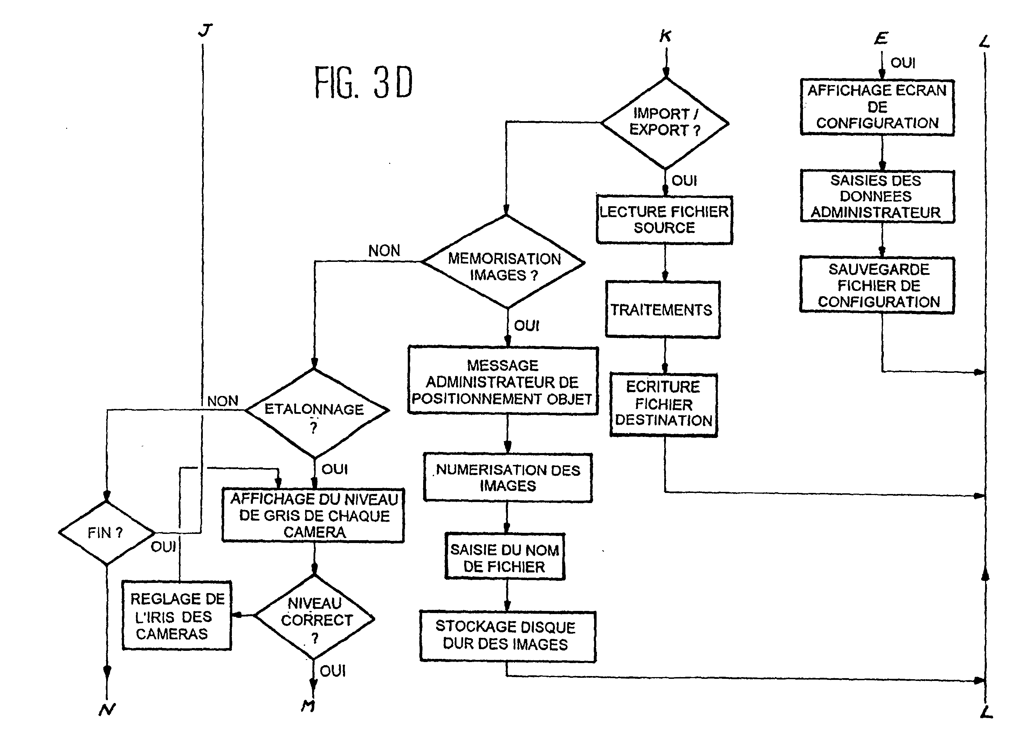

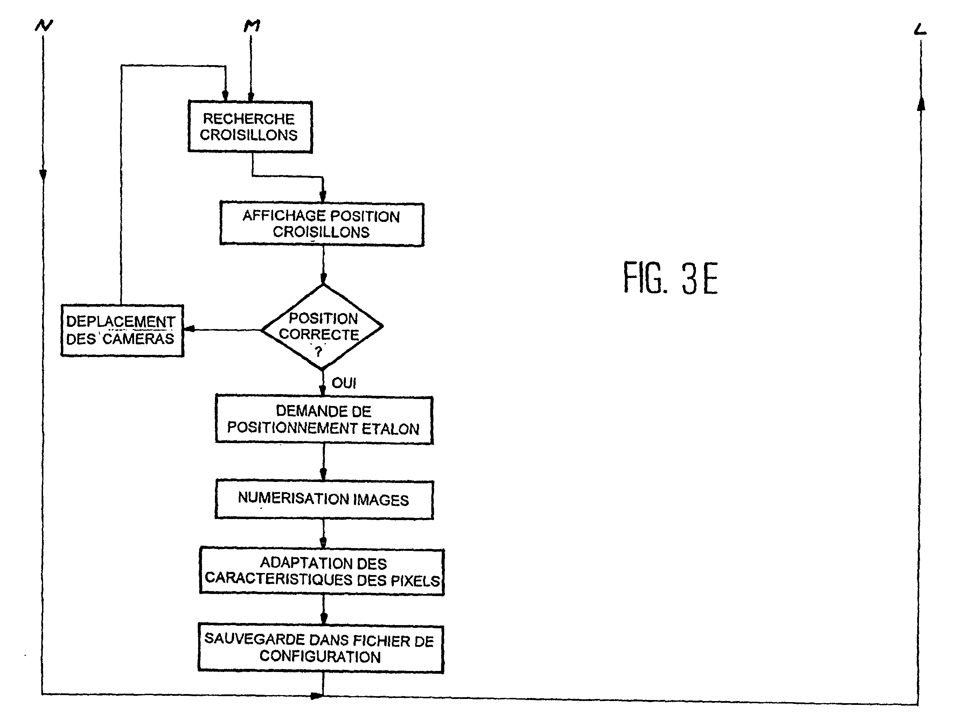

Un organigramme du fonctionnement du système de l'invention est donné sur les figures 3A, 3B, 3C, 3D et 3E.

A la mise en route du système, l'opérateur procède à un étalonnage. Le système est alors en état de marche.

L'opérateur prend l'objet destiné à être mesuré. Il le positionne sur le plateau de la balance.

Il suit alors les indications de l'organe de traitement.

Un signal sonore et un message indique à l'opérateur de saisir le code-barres s'il existe, par exemple à l'aide d'un crayon optique.

Les données à saisir sont simples et se réduisent pour la plupart à une lettre. Aucune compétence particulière en informatique n'est nécessaire. Toutes les opérations s'effectuent en position debout. L'archivage des données sur disquettes est guidé par l'organe de traitement.

Au lancement du programme d'acquisition, l'organe de traitement ouvre un fichier du jour ou continue d'enregistrer des mesures dans le même fichier si la date du jour est inchangée.

Quatre possibilités sont offertes :
- lancer la reconnaissance de dimensions ;
- lancer un autotest de la machine ;
- lancer une calibration de la machine ;
- configurer la machine (unités de mesures, libellés de certains champs de saisie...).

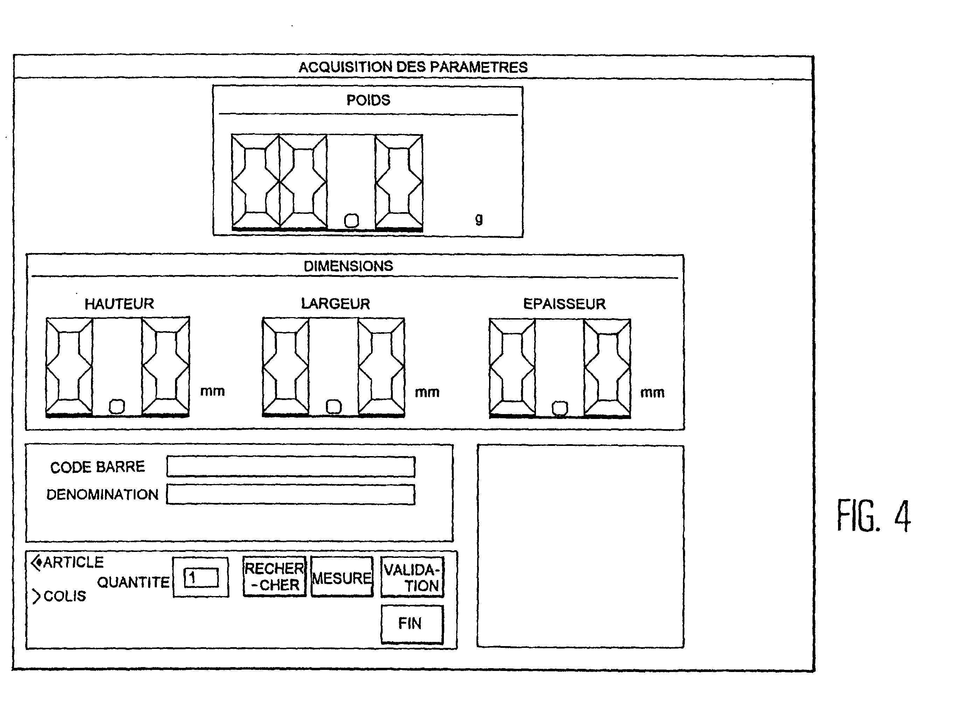

Il suffit de suivre les indications d'un curseur se déplaçant sur l'écran. Un exemple de visualisation de l'écran du système de l'invention est illustré sur la figure 4.

Lorsqu'aucun objet est placé sur la balance, on presse une touche de fonction Tare. La mesure démarre en tapant la touche de fonction Mesure, puis en plaçant ensuite le colis sur le plateau, on presse une touche d'entrée pour déclencher les mesures du poids et des trois dimensions du paquet. Si les résultats paraissent absurdes, les mesures sont recommencées en tapant une touche de fonction Erreur. Le programme permet d'introduire deux libellés par exemple de 40 caractères ainsi qu'un code par lecture au pistolet laser, ou manuellement si nécessaire.

Les valeurs ainsi mesurées sont archivées sur le disque dur par le système.

Un accès à la base de données est possible, l'environnement de travail étant sous Windows NT.

L'application permet ainsi :
- de précharger une base de données contenant l'ensemble du fichier article. Chaque enregistrement au format ASCII comprend notamment :
   - l'identifiant informatique de l'article (adresse disque),
   - l'identifiant professionnel de l'article (code-barres),
   - son libellé,
   - les trois dimensions de l'article unitaire,
   - les trois dimensions de l'emballage standard de l'article (X unités dans chaque carton) ;
- de saisir à partir d'un lecteur code-barres (émulation clavier), ou du clavier l'identifiant de l'article ;
- d'afficher après la saisie, l'enregistrement correspondant à l'article qui a été identifié ;
- de mesurer un article ;
- de mesurer l'emballage standard d'un article ;
- de peser un ou plusieurs articles. Dans ce dernier cas, la moyenne du poids de ces articles est calculée automatiquement ;
- d'extraire les informations mises à jour dans la base de données sur une disquette.

Les valeurs ainsi mesurées sont archivées sur le disque dur, puis transférées sur disquettes à la demande de l'opérateur.

L'interface homme-machine peut être très simple et très conviviale (utilisation de personnels divers non qualifiés).,

Les liaisons avec les autres organes de traitement se font :
- par échanges de bases de données (ajout, modification, suppression...) par disquette ou réseau ;
- par édition d'un listing en fonction de critères simples (marques, types, produits, dimensions..).

Les applications possibles du système de l'invention sont multiples, et par exemple :
- le conditionnement d'objets nus par rapport à une base de données de cartons disponibles ;
- le rangement de colis dans un espace donné, par exemple un véhicule de livraison, ou un entrepôt...

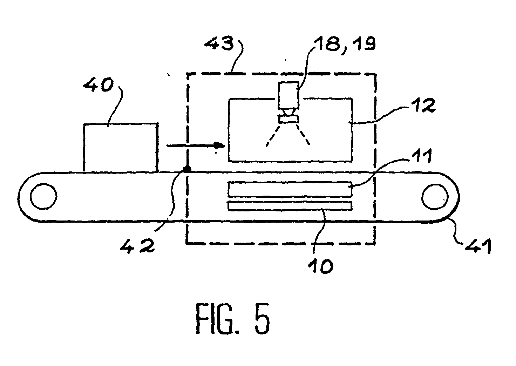

Un couplage du système de l'invention est possible avec un système de convoyage d'objets. Un exemple de réalisation schématique est illustré sur la figure 5. Les objets 40 (référencés 23 ci-dessus) véhiculés sur un tapis roulant 41 passent devant une cellule photoélectrique 42 qui permet de commander la mise en route du système de l'invention 43, comprenant les différents éléments décrits précédemment et notamment les deux boîtes à lumière 11 et 12, les caméras 18 et 19, et la balance 10.

## Revendications

1. Système de mesure des caractéristiques d'un objet, comprenant :
- une balance (10) munie d'un plateau de pesée ;
- deux boîtes à lumière (11, 12), la première étant disposée dans un plan supérieur horizontal au-dessus du plateau de la balance (10), la seconde étant disposée dans un plan vertical au-dessus et sur le côté du plan supérieur de la première ;
- un organe de traitement (13) relié d'une part à un organe d'entrée d'informations (14) et d'autre part à un organe de visualisation (15) ;
- au moins deux caméras (18, 19) dirigées, selon deux directions différentes, vers l'espace de positionnement de l'objet (23) situé au-dessus du plan supérieur de la première boîte à lumière, et reliées à l'organe de traitement.

2. Système selon la revendication 1, dans lequel-une boîte à lumière (11, 12) est constituée d'un écran diffusant éclairé par au moins une source de lumière.

3. Système selon la revendication 2, dans lequel un croisillon est dessiné sur chaque écran diffusant.

4. Système selon la revendication 1, dans lequel les caméras (18, 19) sont dirigées à 90° l'une de l'autre.

5. Système selon la revendication 1, dans lequel l'organe de traitement (13) comprend une unité centrale (32), une unité disque souple(33), un disque dur (34), une carte d'acquisition et de traitement d'image (35), une carte de liaison (36), et une carte vidéo (37).

6. Système selon la revendication 1, comprenant un lecteur de codes à barres.

7. Système selon la revendication 1, qui est disposé sur une table mobile sur des roulettes.

8. Système selon la revendication 1, comprenant un tapis roulant (41) sur lequel est placé l'objet (40), et une cellule photoélectrique (42) reliée à l'organe de traitement.

9. Système selon l'une quelconque des revendications précédentes, qui est utilisé pour compléter ou modifier une base de données.

## Patentansprüche

1. Meßsystem der Eigenschaften eines Objekts, mit:
einer Waage (10), die mit einer Wiegeschale bzw. Wiegeplatte versehen ist,
zwei Lichtkästen (11,12), wobei der erste in einer horizontalen oberen Ebene oberhalb der Wiegeschale bzw. - platte der Waage (10) angeordnet ist und der zweite in einer vertikalen Ebene oberhalb und seitlich der oberen Ebene des ersten (Lichtkastens) angeordnet ist,
einem Bearbeitungselement (13), das einerseits mit einem Informationseingabeelement (14) und andererseits mit einem Visualisierungselement (15) verbunden ist,
mindestens zwei Kameras (18,19), die in zwei verschiedenen Richtungen auf den Positionierungsraum des Objekts (23), der über der oberen Ebene des ersten Lichtkastens gelegen ist, gerichtet sind und mit dem Bearbeitungselement verbunden sind.

2. System nach Anspruch 1, wobei ein Lichtkasten (11,12) aus einem Weichbildschirm besteht, der von mindestens einer Lichtquelle erleuchtet ist.

3. System nach Anspruch 2, wobei ein Gitterkreuz auf jedem Weichbildschirm gezeichnet ist.

4. System nach Anspruch 1, wobei die Kameras (18,19) um 90° versetzt ausgerichtet sind.

5. System nach Anspruch 1, wobei das Bearbeitungselement (13) eine Zentraleinheit (32), eine Floppy-Disk-Einheit (33), eine Festplatte (34), eine Bilderfassungs- und -bearbeitungskarte (35), eine Verbindungskarte (36) und eine Videokarte (37) aufweist.

6. System nach Anspruch 1 mit einem Strichcodeleser.

7. System nach Anspruch 1, das auf einem mobilen Tisch auf Rädern angeordnet ist.

8. System nach Anspruch 1, mit einem Transportband (41), auf dem das Objekt (40) angeordnet ist, und einer photoelektrischen Zelle (42), die mit dem Bearbeitungselement verbunden ist.

9. System nach einem der vorangehenden Ansprüche, das zum Vervollständigen oder Modifizieren einer Datenbank verwendet wird.

## Claims

1. System for measuring the characteristics of an object, comprising:
- scales (10) fitted with a weighing platform;
- two light boxes (11, 12), the first being placed in an upper horizontal plane above the scales (10) platform, the second being placed in a vertical plane above and to the side of the upper plane of the first light box;
- a processing unit (13), connected firstly to an information input device (14) and secondly to a display device (15);
- at least two cameras (18, 19) facing the object (230 positioning space from two different directions located above the upper plane of the first light box and connected to the processing unit.

2. System according to claim 1, in which a light box (11, 12) is composed of a diffusing screen lit by at least one light source.

3. System according to claim 2, in which a cross bar is drawn on each diffusing screen.

4. System according to claim 1, in which the cameras (18, 19) are at an angle of 90° from each other.

5. System according to claim 1, in which the processing unit (13) comprises a central processing unit (32), a floppy disk drive (33), a hard disk (34), an image acquisition and processing card (35), a communications card (36) and a video card (37).

6. System according to claim 1, comprising a bar code reader.

7. System according to claim 1, which is placed on a mobile table on rollers.

8. System according to claim 1, comprising a conveyor belt (41) on which the object (40) is placed, and a photoelectric cell (42) connected to the processing unit.

9. System according to any one of the preceding claims, used to add to or modify a database.
